# EUROPÄISCHE PATENTANMELDUNG

(11) **EP 4 764 488 A1**
(43) Veröffentlichungstag der Anmeldung: **24.06.2026**
(21) Anmeldenummer: 25218096.3
(22) Anmeldetag: 24.11.2025
(51) Int. Cl.: G01N 29/14, B07C 5/34, G01N 29/44

(54) **VERFAHREN ZUM UMSCHLAGEN VON PACKSTÜCKEN MIT INTEGRIERTER BESCHÄDIGUNGSPRÜFUNG**

(30) Priorität: 20.12.2024 DE 102024139390
(71) Anmelder: Deutsche Post AG, 53113 Bonn (DE)
(72) Erfinder: KAMB, Dennis, 51503 Rösrath (DE); NÄGEL, Ulf, 54595 Prüm (DE); FRANKE, Christian-Jochum, 53111 Bonn (DE)
(74) Vertreter: Cohausz & Florack

(57) **Zusammenfassung**

Beschrieben und dargestellt ist Verfahren zum Umschlagen von Packstücken (2) jeweils umfassend ein Packmittel und ein in dem Packmittel verpacktes Packgut, insbesondere in einer Sortierstation (1). Um den logistischen Aufwand infolge von beschädigten Packgütern verringern zu können, ist vorgesehen, dass wenigstens einzelnen der umzuschlagenden Packstücke (2) in einer Prüfstation (18) wenigstens eine definierte Prüfbewegung zum Induzieren von akustischen und/oder mechanischen Antwortsignalen in Abhängigkeit von möglichen Beschädigungen des Packguts aufgeprägt wird, dass die Antwortsignale von wenigstens einem der Prüfstation (18) zugeordneten akustischen und/oder mechanischen Sensor (26,27) erfasst und an eine Auswerteeinheit weitergeleitet werden, dass die Auswerteeinheit (11) die Antwortsignale einer auf einer Vielzahl von zuvor empirisch ermittelten Zusammenhängen von Antwortsignalen und möglichen Beschädigungen zugehöriger Packgüter basierenden Mustererkennung unterzieht, dass die Auswerteeinheit (11) den Packstücken (2) anhand der Mustererkennung wenigstens einen eine mögliche Beschädigung charakterisierenden Beschädigungsparameter zuordnet und dass die Packstücke (2) in Abhängigkeit des jeweiligen Beschädigungsparameters auf unterschiedliche Weise weiter umgeschlagen werden.

## Beschreibung

Die Erfindung betrifft ein Verfahren zum Umschlagen von Packstücken jeweils umfassend ein Packmittel und ein in dem Packmittel verpacktes Packgut, insbesondere in einer Sortierstation.

Verfahren zum Umschlagen von Packstücken sind aus unterschiedlichen Anwendungen bekannt, wobei die Packstücke in vielen Fällen zunächst Transporteinheiten entnommen, anschließend sortiert oder anderweitig gehandhabt und schließlich in anderer Zusammensetzung wieder in Transporteinheiten verladen werden. Bei den Packstücken handelt es sich um die Gesamtheit aus einem Packgut, beispielsweise einer zu versendenden Ware, und einem Packmittel in dem das Packgut verpackt ist. Die Packmittel können dabei wie die Packgüter sehr unterschiedliche Größen und Eigenschaften aufweisen. Es kann aber auch vorkommen, dass viele gleichartige Packgüter, die in gleichartigen Packmitteln verpackt sind, umgeschlagen werden. Mithin können die zum Umschlagen vorgesehenen Packstücke sehr unterschiedlich oder aber auch in hohem Maße gleichartig ausgebildet sein.

In sogenannten Sortierstationen werden die Packstücke typischerweise zunächst aus Transporteinheiten entnommen und an ein Fördersystem übergeben, das Förderbänder umfassen kann aber nicht muss. Die entnommenen Packstücke werden dann in wenigstens eine Transportreihenfolge gebracht und in dieser Transportreihenfolge zu einem optischen Scanner transportiert, der einen Sortierparameter der Packstücke erfasst. Die Packstücke werden dann in der Transportreihenfolge von dem Fördersystem einer Sortiereinrichtung zugeführt, in der die Packstücke anhand des Sortierparameters sortiert werden. Die Sortiereinrichtung teilt die Packstücke der Transportreihenfolge in verschiedene Sortierreihenfolgen auf. Die Packstücke können dann in diesen Sortierreihenfolgen in unterschiedliche Transporteinheiten verladen werden. Es kann aber auch nach dem Sortieren zunächst eine Zwischenspeicherung der Packstücke der unterschiedlichen Sortierreihenfolgen erfolgen. Die Packstücke werden dann später und bedarfsweise in einer anderen Reihenfolge, der Beladereihenfolge, in die unterschiedlichen Transporteinheiten verladen.

Die Packstücke können beispielsweise zunächst in Aufbauten von Lastkraftwagen oder Anhängern angeliefert, entladen und dabei in eine Transportreihenfolge vereinzelt werden. Die Packstücke können dann nach dem Sortieren in Transporteinheiten etwa in Form von Rollbehälter, Gitterboxen, Paletten, Paletten mit Wänden oder Unit Load Devices (ULD) verladen werden. Unit Load Devices sind Paletten und Container, die zum Beladen von Flugzeugen verwendet werden und daher an die Abmessungen von Flugzeugrümpfen angepasst sind. Als Transporteinheiten kommen aber auch sogenannte Wechselbrücken, also LKW-Aufbauten mit Stützen zum Abstellen ohne Fahrgestell und zum Unterfahren mit einem Fahrgestell zum Zwecke des Aufladens in Frage, und zwar als zu beladende Transporteinheiten wie auch als in der Sortierstation zu entladende Transporteinheiten.

Die Packstücke können nach dem Scannen in einem Zwischenspeicher, etwa einem Regallager oder dergleichen, bis zum Weitertransport der Packstücke zwischengespeichert werden. Aus dem Zwischenspeicher können die Packstücke dann in einer bestimmten oder beliebigen Reihenfolge entnommen werden. Um eine hohe Effizienz und eine geringe Verweilzeit der Packstücke in der Sortierstation zu erreichen, wird aber oft auf das Zwischenspeichern der Packstücke verzichtet. Die Packstücke werden von einem Fördersystem vom Ort des Entladens aus Transporteinheiten zum Ort des Verladens in andere Transporteinheiten gefördert. Das Fördersystem kann dabei beispielsweise Förderbänder, Rollenförderer und/oder Rutschen aufweisen.

Um den in den Transporteinheiten zur Verfügung stehenden Platz effizient nutzen zu können, werden in einigen Fällen auch Größenmaße der Packstücke erfasst. Ein Beladungsalgorithmus kann dann vorgeben, wo bestimmte Packstücke in die Transporteinheiten gestapelt werden sollten, um wenig Platz zu verschenken.

Beim Umschlagen von Packstücken insbesondere in entsprechenden Sortierstationen kommt es immer wieder vor, dass die Packgüter der Packstücke durch vorhergehende Ereignisse beschädigt worden sind. Dies wird aber meist erst beim späteren Öffnen der Packstücke am Zielort erkannt. Die beschädigten Packgüter werden dann vielfach reklamiert und zurückgeschickt. Als Ersatz für das beschädigte Packgut muss dann ein neues, unbeschädigten Packgut geliefert werden. Daher führen beschädigte Packgüter zu einem erhöhten logistischen Aufwand und insbesondere zu unnötigen Transporten.

Daher liegt der vorliegenden Erfindung die Aufgabe zugrunde, das Verfahren der eingangs genannten und zuvor näher erläuterten Art derart auszugestalten und weiterzubilden, dass ein logistischer Aufwand infolge von beschädigten Packgütern verringert werden kann.

Diese Aufgabe ist gemäß Anspruch 1 gelöst durch ein Verfahren zum Umschlagen von Packstücken jeweils umfassend ein Packmittel und ein in dem Packmittel verpacktes Packgut, insbesondere in einer Sortierstation,
- bei dem wenigstens einzelnen der umzuschlagenden Packstücke in einer Prüfstation wenigstens eine definierte Prüfbewegung zum Induzieren von akustischen und/oder mechanischen Antwortsignalen in Abhängigkeit von möglichen Beschädigungen des Packguts aufgeprägt wird,
- bei dem die Antwortsignale von wenigstens einem der Prüfstation zugeordneten akustischen und/oder mechanischen Sensor erfasst und an eine Auswerteeinheit weitergeleitet werden,
- bei dem die Auswerteeinheit die Antwortsignale einer auf einer Vielzahl von zuvor empirisch ermittelten Zusammenhängen von Antwortsignalen und möglichen Beschädigungen entsprechender Packgüter basierenden Mustererkennung unterzieht,
- bei dem die Auswerteeinheit den Packstücken anhand der Mustererkennung wenigstens einen eine mögliche Beschädigung charakterisierenden Beschädigungsparameter zuordnet und
- bei dem die Packstücke in Abhängigkeit des jeweiligen Beschädigungsparameters auf unterschiedliche Weise weiter umgeschlagen werden.

Die Packstücke werden erfindungsgemäß nicht einfach umgeschlagen, sondern zwischendurch einer Beschädigungsprüfung unterzogen. Dies gilt jedenfalls für einzelne oder bestimmte Packstücke. Dazu werden die Packstücke in eine Prüfstation überführt, in der den Packstücken eine definierte Prüfbewegung aufgeprägt wird. Dies kann während des Transports der Packstücke durch die Prüfstation erfolgen. Der Genauigkeit halber wird es sich jedoch in vielen Fällen anbieten, wenn die Packstücke in der Prüfstation während der Prüfung verharren, mit Ausnahme der Prüfbewegung. Die Packstücke gelangen also in die Prüfstation, werden darin nicht weitertransportiert, sondern mit der Prüfbewegung beaufschlagt und werden erst danach wieder aus der Prüfstation ausgeschleust und zum Zwecke des Umschlagens weitertransportiert. Die Prüfbewegung kann aber auch beim Durchlaufen der Prüfstation auf die Packstücke aufgeprägt werden, ohne dass die Packstücke dazu angehalten werden müssten.

Durch die definierte Prüfbewegung soll ein akustisches und/oder mechanisches Antwortsignal hervorgerufen werden, anhand dessen Rückschlüsse auf eine mögliche Beschädigung des Packguts gezogen werden können. Beispielsweise kann die Prüfbewegung eine Art Rütteln oder dergleichen darstellten. Wenn das Packgut aus Glas oder Porzellan gebildet und zudem zerbrochen sein sollte, würde als Antwortsignal beispielsweise ein Klirren oder dergleichen erhalten werden. Dieses Klirren könnte dann als oder zusammen mit anderen Bestandteilen des Antwortsignals mit einem akustischen Sensor, wie beispielsweise einem Mikrofon, aufgenommen und ausgewertet werden. Alternativ oder zusätzlich könnte mit einem mechanischen Sensor auch beispielsweise ein Nachschwingen des Packstücks infolge der Prüfbewegung erfasst werden, das anders ausfallen würde je nachdem ob das Packgut zerbrochen ist oder nicht. Unterschiede des Nachschwingens können dabei bedarfsweise sogar festgestellt werden, wenn ein Packgut nicht zerbrochen, sondern lediglich gerissen oder gesprungen ist. Grundsätzlich kann aus der Trägheitscharakteristik, mit welcher das Packstück auf die Prüfbewegung reagiert auf die Unversehrtheit oder Beschädigung des Packguts geschlossen werden. Denkbar sind noch weitere Antwortsignale, welche zur Auswertung herangezogen werden können.

Das wenigstens eine von wenigstens einem geeigneten akustischen und/oder mechanischen Sensor erfasste Antwortsignal betreffend ein geprüftes Packstück kann zur Auswertung an eine Auswerteeinheit weitergeleitet werden, welche das Antwortsignal bedarfsweise zunächst aufbereitet. Das aufbereitete oder nicht aufbereitete Antwortsignal kann von der Auswerteeinheit mit bekannten Antwortsignalen verglichen werden. Die bekannten Antwortsignale können zuvor an Packstücken aufgenommen worden sein, welche bekannte Beschädigungen aufgewiesen haben. Möglicherweise sind zudem Antwortsignale von Packstücken aufgenommen worden, die keine Beschädigung aufgewiesen haben. Dabei können grundsätzlich die Packstücke und die Beschädigungen, welche zu den vorbekannten Antwortsignalen geführt haben, sehr unterschiedlich sein, um von sehr unterschiedlichen Packstücken aufgenommene Antwortsignale auswerten zu können. Die Antwortsignale sind dabei aber vorzugsweise wenigstens im Wesentlichen basierend auf den gleichen Prüfbewegungen aufgenommen worden, um einen höheren Aussagegehalt bei der Auswertung der Antwortsignale erreichen zu können.

Aufgrund der vorbekannten Antwortsignale kann auf Basis der mittels des wenigstens einen Sensors erfassten Antwortsignale eine Mustererkennung durchgeführt werden, wobei Muster vorbekannter Antwortsignale mit Mustern des erfassten Antwortsignals verglichen werden. Durch die Vielzahl der zuvor empirisch ermittelten Zusammenhänge von Antwortsignalen und möglichen Beschädigungen entsprechender Packgüter, liegen Erkenntnisse vor, die es erlauben, durch Wiedererkennen von bestimmten Mustern bestimmte Rückschlüsse auf eine Beschädigung des Packguts zu ziehen. Es können allgemeine Korrelationen zwischen den Antwortsignalen und den Beschädigungen der Packstücke festgestellt werden, wobei bestimmte Muster der Antwortsignale im groben wiedererkannt werden können, um so mit einer hohen Wahrscheinlichkeit anhand von neu aufgenommenen Antwortsignalen auf entsprechende Beschädigungen der Packgüter schließen zu können. In diesem Zusammenhang bietet es sich an, wenn die Mustererkennung unter Zuhilfenahme einer künstlichen Intelligenz (KI) erfolgt. Dabei kann die KI verwendet werden, um bei den vorgehenden empirischen Untersuchungen überhaupt Muster festzustellen. Die KI kann alternativ oder zusätzlich auch dazu genutzt werden, die Antwortsignale mit den zuvor ermittelten Mustern zu vergleichen, um daraus ein Beschädigungsparameter für die entsprechenden Packstücke abzuleiten. Entsprechende grundlegende KI-basierte Verfahren und Prozesse sind an sich bekannt und können vom Fachmann ohne weiteres auf den vorliegenden Anwendungsfall übertragen werden, ohne dass es für den Fachmann hierfür besonderer weiterer Ausführungen bedarf.

Die Mustererkennung erlaubt es basierend auf bestimmten Antwortsignalen der Packstücke den Packstücken Beschädigungsparameter zuzuordnen, welche mögliche Beschädigungen charakterisieren. Es kommt dabei nicht unbedingt auf eine sehr genaue Charakterisierung der Beschädigung in jedem Einzelfall an. Es reicht in vielen Fällen möglicherweise aus, wenn der Beschädigungsparameter geeignet ist, um anhand des Beschädigungsparameters eine geeignete weitere Handhabung des zugeordneten Packstückes auswählen zu können. So können die Packstücke in Abhängigkeit des jeweiligen Beschädigungsparameters auf unterschiedliche und jeweils bevorzugte Weise weiter umgeschlagen werden. Beispielsweise können beschädigte Packgüter anders gehandhabt werden als nicht beschädigte Packgüter. Denkbar ist auch das unterschiedliche Beschädigungen und/oder Beschädigungen bei unterschiedlichen Packgütern jeweils eine unterschiedliche Handhabung während des Umschlagens der Packstücke zur Folge haben kann.

So können beispielsweise nur Packstücke mit bestimmten Beschädigungsparametern in üblicher Weise weiter umgeschlagen werden, während die Packstücke mit anderen Parametern ausgeschleust werden. Die erstgenannten Beschädigungsparameter werden beispielsweise für Packgüter vergeben, die wahrscheinlich nicht oder nur geringfügig beschädigt sind. Die anderen Beschädigungsparameter deuten dagegen an, dass die Packgüter der entsprechenden Packstücke erheblich beschädigt oder gar zerstört sind. Für solche Packstücke lohnt sich ein weiteres Umschlagen und Transportieren nicht, weil die Packgüter am Bestimmungsort nicht bestimmungsgemäß verwendet werden können. Sie werden dann am Bestimmungsort entsorgt oder zurückgeschickt. Um dies zu vermeiden, werden die Packstücke mit bestimmten Beschädigungsparametern beispielsweise direkt vor Ort entsorgt oder direkt vor Ort für das Zurücksenden vorbereitet. Ein unnötiger weiterer Transport der Packstücke kann dann vermieden werden. Das Entsorgen oder Zurückschicken muss aber nicht direkt in einer Sortierstation erfolgen. Es kann daher vorgesehen sein, dass in der Sortierstation bestimmte Transporteinheiten mit Packstücken beladen werden, denen ein Betriebsparameter zugeordnet ist, welcher ein nur leicht oder gar nicht beschädigtes Stückgut repräsentiert. **In** andere Transporteinheiten werden dagegen Packstücke verladen, denen ein eine erhebliche Beschädigung oder Zerstörung repräsentierender Beschädigungsparameter zugeordnet ist. Die einen Transporteinheiten können dann wie vorgesehen weitertransportiert werden, während die anderen Transporteinheiten in einer anderen als der vorgesehen Weise weitertransportiert werden, weil ihnen Beschädigungsparameter zugeordnet sind, die einen Weitertransport wie vorgesehen als unzweckmäßig erscheinen lassen.

Der Beschädigungsparameter kann bedarfsweise nur zwei unterschiedliche Werte annehmen, etwa 0 oder 1. Einer dieser Werte repräsentiert dabei ein beschädigtes Packgut, während der andere Wert des Beschädigungsparameters ein nicht beschädigtes Packgut repräsentiert. Denkbar ist es aber auch, mehr als zwei Werte des Beschädigungsparameters zuzulassen. Dann kann zwischen den beiden extremen Zuständen, nämlich vollständig zerstört und vollkommen intakt, feiner abgestuft werden. Es kann alternativ oder zusätzlich berücksichtigt werden, wie hoch die Wahrscheinlichkeit einer Beschädigung ist. Beispielsweise kann der Wert des Beschädigungsparameters mit der Wahrscheinlichkeit einer Beschädigung des Packguts und/oder des Grads der potenziellen Beschädigung des Packguts ansteigen. Wie mit dem jeweiligen Packstück weiter verfahren wird, kann dann anhand des Beschädigungsparameters bestimmt werden. Bis zu einem bestimmten Wert des Beschädigungsparameters kann das Packstück beispielsweise wie vorgesehen umgeschlagen werden. Erst ab Überschreiten eines bestimmten Grenzwertes des Beschädigungsparameters kann das zugehörige Packstück dem vorgesehenen Umschlagen entzogen und bedarfsweise zurückgesendet oder entsorgt werden. Dabei kann der Grenzwert so gewählt werden, dass Packstücke im Zweifel wie vorgesehen umgeschlagen werden und nur dann anderweitig gehandhabt werden, wenn mit sehr hoher Wahrscheinlichkeit eine Beschädigung erwartet wird, insbesondere wenn es sich dabei zudem potenziell um eine sehr gravierende Beschädigung handelt. Damit soll vermieden werden, dass tatsächlich nicht oder nur sehr geringfügig beschädigte Packgüter zurückgeschickt oder entsorgt werden.

Um dieses Risiko weiter zu minimieren, kann vorgesehen sein, dass Packstücke, denen ein Beschädigungsparameter mit einem Wert oberhalb des zuvor erläuterten Grenzwertes zugeordnet wird, einer händischen Nachprüfung durch einen Mitarbeiter unterzogen werden. Der Mitarbeiter kann dann das Packmittel öffnen und das Packgut händisch und optisch auf Beschädigungen untersuchen. Erst wenn der Mitarbeiter tatsächlich feststellt, dass das Packgut unverhältnismäßig stark beschädigt ist, wird das zugehörige Packstück zurückgeschickt oder entsorgt. Welche der beiden Optionen gewählt wird kann der Mitarbeiter bedarfsweise selbst entscheiden.

Bei einer ersten besonders bevorzugten Ausgestaltung des Verfahrens erfasst ein akustischer Sensor akustische Antwortsignale in Form der Lautstärke von wenigstens bestimmten Frequenzen und/oder Frequenzbändern. Die Antwortsignale können auch als Antwortfunktion in Form eines Audio-Frequenzspektrums verstanden werden. Es werden in vielen Fällen nur Audiosignale bestimmter Frequenzen relevant sein, um diese zur Mustererkennung an ein Auswerteeinheit weiterzuleiten. Nur in diesen Frequenzbereichen ist dann mit charakteristischen Geräuschen zu rechnen, die Rückschlüsse auf eine mögliche Beschädigung des Packguts zulassen. Unabhängig davon bietet es sich der Einfachheit halber an, wenn der wenigstens eine akustische Sensor ein Mikrofon ist.

Alternativ oder zusätzlich kann wenigstens ein mechanischer Sensor ein mechanisches Antwortsignal aufnehmen, das die sich durch die Prüfbewegung induzierte Schwingung, Trägheit, Auslenkung und/oder Kraft darstellt. Beispielsweise könnte das Packstück in wenigstens eine Richtung beschleunigt werden, und zwar als Folge der dem Packstück aufgeprägten Prüfbewegung, wonach das Packstück wieder abgebremst wird. Dabei lässt sich die Kraft für das Abbremsen, die Auslenkung beim Abbremsen im Sinne eines Bremswegs oder die dem Abbremsen entgegengerichtete Trägheit ermitteln. Denkbar ist alternativ oder zusätzlich auch, dass dem Packstück eine Schwingungsbewegung aufgeprägt wird. Nachdem das Packstück zum Schwingen angeregt worden ist, kann mit dem wenigstens einen mechanischen Sensor ermittelt werden, wie das Packstück nachschwingt. Hierbei kann die Zeitspanne relevant sein, bis die Schwingung um ein bestimmtes Maß gedämpft ist. Es kann alternativ oder zusätzlich auch relevant sein, wie sich die Frequenz und die Amplitude des Nachschwingens verändert, während das Packstück nachschwingt. Mit anderen Worten kann es ganz unabhängig von der Art des Signals zweckmäßig sein, das Antwortsignal zeitabhängig und/oder richtungsabhängig aufzunehmen.

Damit die Erfassung mechanischer Antwortsignale nicht durch die Prüfbewegung selbst beeinträchtigt wird, bietet es sich an, wenn die mechanischen Antwortsignale im Anschluss an die Prüfbewegung erfasst werden. Es sollte aber nicht zu lange mit dem Erfassen der Prüfbewegungen nach dem Ende der Prüfbewegung gewartet werden, damit das induzierte Antwortsignal noch gemessen werden kann. Daher wird es in vielen Fällen besonders bevorzugt sein, wenn die mechanischen Antwortsignale wenigstens im Wesentlichen unmittelbar im Anschluss an die Prüfbewegung erfasst werden.

Das Erfassen akustischer Antwortsignale erfolgt dagegen bevorzugt während des Aufprägens der Prüfbewegung auf das Packstück. Die akustischen Antwortsignale werden typischerweise unmittelbar durch die Prüfbewegung ausgelöst und halten nicht über einen längeren Zeitraum an.

Die Prüfbewegung kann über eine Grundplatte der Prüfstation auf die Packstücke übertragen werden. Dazu lassen sich die Packstücke auf die Grundplatte legen. Bedarfsweise werden die Packstücke zum Übertragen der Prüfbewegung auf der Grundplatte verspannt oder mit Haltern seitlich gehalten. Zum Übertragen der Prüfbewegung lässt sich die Grundplatte in wenigstens einer Raumrichtung bewegen und/oder um wenigstens eine Raumrichtung schwenken. Denkbar ist eine Bewegung in allen drei Raumrichtungen und ein Schwenken um drei senkrecht zueinander ausgerichtete Schwenkachsen, und zwar bedarfsweise jeweils gleichzeitig.

Die Prüfbewegung kann zur Verbesserung der Prüfgenauigkeit in einer vorbestimmten Weise an das jeweilige Packstück angepasst werden. Dabei lassen sich insbesondere eine Frequenz und/oder eine Amplitude der Prüfbewegung anpassen. Unabhängig davon kann eine Anpassung der Prüfbewegung anhand des für dasselbe Packstück zuvor bereits ermittelten Antwortsignals erfolgen. Das Antwortsignal lässt dann Rückschlüsse auf die Art des Packguts zu, für dieses dann eine geeignete Prüfbewegung ausgesucht werden kann. Alternativ oder zusätzlich kann die Prüfbewegung, insbesondere die Frequenz und/oder die Amplitude der Prüfbewegung, in vorbestimmter Weise in Anhängigkeit der Art, der Größe und/oder der Beschaffenheit des Packstücks angepasst werden. Die Art, Größe und/oder Beschaffenheit des Packstücks wird dann vorzugsweise ermittelt, bevor das Packstück in die Prüfstation gelangt.

Die umzuschlagenden Packstücke können mit einem optischen Scanner, insbesondere in Form eines Sechsseiten-Scanners und/oder eines Linienscanners, insbesondere eines RGB-Linienscanners, und/oder eines Volumenscanners gescannt werden. Anhand der Aufnahmen des Scanners kann dann die Auswerteeinheit die Art, Größe und/oder Beschaffenheit der umzuschlagenden Packstücke ermitteln. Wenn dies vor einer Prüfung der Packstücke erfolgt, kann die Prüfung der Packstücke, insbesondere die Prüfbewegung an die Art, Größe und/oder Beschaffenheit der umzuschlagenden Packstücke angepasst werden. Es kann alternativ oder zusätzlich auch vorgesehen sein, dass nur Packstücke einer vorbestimmten Art, Größe und/oder Beschaffenheit der Prüfstation zur Zuordnung eines Beschädigungsparameters zugeführt werden. Dies sind dann insbesondere solche Packstücke mit einer erhöhten Wahrscheinlichkeit, dass die verpackten Packgüter beschädigt sind. Wodurch sich solche Packstücke tendenziell von anderen Packstücken unterscheiden, kann ebenfalls zuvor empirisch durch eine Vielzahl von Untersuchungen ermittelt werden.

Besonders zweckmäßig ist es dabei, wenn die Auswerteeinheit die Größe der Packstücke in Form einer Höhe, einer Breite und/oder einer Länge ermittelt. Diese Parameter sind recht objektiv und vergleichbar. Die Auswerteeinheit kann alternativ oder zusätzlich auch die Art der Packstücke anhand der Form, der Oberfläche, der Art des Packmittels, einem erfassten Logo, einem erfassten Aufkleber, einer erfassten Absender-Adresse und/oder einem erfassten Retourenlabel ermitteln. Dies lässt in vielen Fällen relevante Rückschlüsse auf das Packstück und gegebenenfalls das darin enthaltene Packgut zu, welche sich bedarfsweise auch vorab empirisch ermitteln lassen. Wenigstens einer der zuvor genannten Parameter kann darauf schließen lassen, dass das Packstück von einem Unternehmen oder einer Privatperson hergestellt wurde, wobei professionell verpackte Packgüter weniger dazu neigen beschädigt zu werden. Die Art, die Oberfläche und die Form des Packstücks kann ein Indiz dafür sein, welchen Schutz das Packmittel bietet und welche Packgüter darin wahrscheinlich verpackt sind. Daraus lässt sich dann ebenfalls ableiten, ob eine Beschädigung des Packguts wahrscheinlicher oder unwahrscheinlicher ist, um möglichst nur Packgüter in der Prüfstation auf eine Beschädigung zu prüfen, die auch mit einer hinreichenden Wahrscheinlichkeit beschädigt sein können.

Denkbar ist auch, dass die Auswerteeinheit die Beschaffenheit der Packstücke anhand der Feuchtigkeit des Packmittels, eines ermittelten Flecks des Packmittels, der Art und/oder Anordnung von auf dem Packstück angebrachten Klebebändern, einem Öffnungsgrad eines Öffnungsbereichs des Packstücks, der Form der Kanten, Ecken, Nähte des Packstücks, von Oberflächendefekten des Packstücks wie Abschabungen, Dellen, Knicke, Risse und/oder Schnitte ermittelt. Ist das Packmittel feucht, so kann dieses das Packgut möglicherweise nicht mehr ausreichend gegenüber Beschädigungen schützen. Ein Fleck kann dabei darauf hindeuten, dass das Packmittel feucht war und/oder ein Packgut ausgelaufen ist. Die Klebebänder können ein Indiz dafür sein, wie zuverlässig bzw. professionell das Packgut verpackt worden ist. Ein hoher Öffnungsgrad eines Öffnungsbereichs des Packstücks kann ebenfalls auf eine unzureichende Verpackung des Packguts hindeuten. Die Form der Kanten, Ecken, und Nähte des Packmittels kann ebenso wie ein Oberflächendefekt des Packmittels, wie Abschabungen, Dellen, Knicke, Risse und/oder Schnitte darauf hindeuten, dass das verpackte Packgut des Packstückes möglicherweise durch einen vorhergehenden Transport beschädigt worden ist.

Aufgrund der Prüfung der Packstücke auf Beschädigungen kann erreicht werden, dass nur die Packstücke einer Sortiereinrichtung und/oder einer Verladestation zugeführt werden, deren Beschädigungsparameter bestimmte Kriterien erfüllen. Diese Kriterien können so gewählt werden, dass die Packstücke mit diesen Beschädigungsparametern mit hoher Wahrscheinlichkeit Packgüter enthalten, die unbeschädigt sind. Nur solche Packstücke bedürfen der Sortierung und/oder einer erneuten Verladung, wobei die Verladung nach einer Sortierung erfolgen kann aber nicht muss. Dabei ist es aber grundsätzlich tolerierbar, wenn vereinzelt auch Packstücke mit anderen Beschädigungsparametern der Sortiereinrichtung und/oder der Verladestation zugeführt werden. Packstücke, denen andere Beschädigungsparameter zugeordnet sind, werden aber wenigstens grundsätzlich anders weiterbehandelt oder weitertransportiert. Diese Packstücke werden somit aus dem normalen Prozess des Umschlagens ausgeschleust, weil mit hoher Wahrscheinlichkeit zu vermuten ist, dass die Packgüter in diesen Packstücken beschädigt sind.

Damit sich die Packstücke mit potenziell beschädigten Packgütern nicht ansammeln, sondern abgegeben werden können, kann vorgesehen sein, die umgeschlagenen Packstücke wenigstens im Wesentlichen abhängig von den jeweiligen Beschädigungsparametern unterschiedlichen Verladestationen zum Verladen der Packstücke in unterschiedliche Transporteinheiten zuzuführen. Es werden dann Transporteinheiten mit wahrscheinlich nicht beschädigten Packgütern beladen, wobei die Transporteinheiten dann wie vorbestimmt weitertransportiert werden. In andere Transporteinheiten werden nur Packstücke verladen, welche wahrscheinlich beschädigte Packgüter aufweisen und daher nicht wie vorbestimmt weitertransportiert werden sollen. Diese sollen möglicherweise zurückgeschickt oder entsorgt werden.

Die zuvor beschriebenen Vorteile kommen in besonderem Maße zum Tragen, wenn die Packstücke beim Umschlagen aus Transporteinheiten entnommen und, insbesondere nach einem Sortieren der Packstücke in einer Sortiereinrichtung, in anderer Zusammensetzung wieder in Transporteinheiten verladen werden. Dies kann beispielsweise in Sortiereinrichtungen zweckmäßig sein, um gemeinsam in Transporteinheiten angelieferte Packstücke auf unterschiedliche Transporteinheiten zu verteilen und auf unterschiedlichem Wege und/oder an unterschiedliche Ziele weiter zu transportieren. Dabei bieten sich als Transporteinheiten insbesondere Rollbehälter, Gitterboxen, Paletten, mit oder ohne Wände, Wechselbrücken, LKW und/oder Unit Load Devices (ULD) an.

Ein hoher Durchsatz beim Umschlagen der Packstücke lässt sich erreichen, wenn die Packstücke nach dem Entnehmen aus den Transporteinheiten nacheinander in einer Transportreihenfolge dem optischen Scanner und anschließend einer Übergabeeinheit zum Übergeben von einzelnen Packstücken aus der Transportreihenfolge und in die Prüfstation zugeführt werden. Welche Packstücke von der Übergabeeinheit an die Prüfstation zur Prüfung auf Beschädigung übergeben werden, kann bedarfsweise in Abhängigkeit von den Aufnahmen des Scanners entschieden werden. So kann erreicht werden, dass nicht unnötig viele Packstücke in der Prüfstation untersucht werden müssen, sondern nur solche, bei denen anhand der Aufnahmen des Scanners auf eine höhere potenzielle Wahrscheinlichkeit einer Beschädigung geschlossen werden kann. Anhand welcher Parameter dies möglicherweise entschieden werden kann, wurde zuvor bereits diskutiert.

Je nach den Beschädigungsparametern, welche den in der Prüfstation untersuchten Packstücke zugeordnet werden, können die Packstücke von der Übergabeeinheit wieder zurück in die Transportreihenfolge überführt werden. Dies kann dann vorzugsweise an einer anderen als der ursprünglichen Position in der Transportreigenfolge erfolgen. Alternativ dazu können die Packstücke, denen andere Beschädigungsparameter zugeordnet sind, an eine von der Transportreihenfolge separate Behandlungseinrichtung abgegeben werden. Diese dient beispielsweise dem Rücksenden der Packstücke oder einem Entsorgen der Packstücke. Bevor dies aber erfolgt, kann vorgesehen sein, dass die Packstücke von einem Mitarbeiter geöffnet werden und dass der Mitarbeiter nachsieht, ob das entsprechende Packgut tatsächlich beschädigt ist. Wenn diese händische Nachprüfung zu dem Ergebnis führt, dass das Packgut unversehrt ist, kann das Packgut wieder verpackt und das entsprechende Packstück wieder in die ursprüngliche Transportreihenfolge eingeschleust werden, so als hätte bereits die Prüfung in der Prüfstation ergeben, dass das entsprechende Packgut sehr wahrscheinlich nicht beschädigt ist.

Für ein effizientes Umschlagen der Packstücke ist es grundsätzlich zweckmäßig, wenn die Packstücke in der sich nach der Übergabeeinheit einstellenden Transportreihenfolge der Sortiereinrichtung zugeführt und in der Sortiereinrichtung in Sortierreihenfolgen aufgeteilt werden. So kann das Umschlagen der Packstücke schnell und mit geringem Platzbedarf realisiert werden.

Das Sortieren selbst kann sehr zuverlässig und schnell erfolgen, wenn die Auswerteeirichtung anhand der Aufnahmen des optischen Scanners einen Sortierparameter der Packstücke erfasst und den Packstücken entsprechend zuordnet. Die Packstücke können dann entsprechend des Sortierparameters in der Sortiereinrichtung sortiert werden. Bei dem Sortierparameter kann es sich beispielsweise um eine Zielinformation, etwa eine Adresse, handeln, welche angibt wohin das betreffende Packstück zu transportieren ist.

Nachfolgend wird die Erfindung anhand einer lediglich ein Ausführungsbeispiel darstellenden Zeichnung nähere erläutert. In der Zeichnung zeigt
- Fig. 1: eine Sortierstation 1 zum Umschlagen von Packstücken in einer schematischen Ansicht und
- Fig. 2: die Prüfstation aus Fig. 1 in einer schematischen Seitenansicht.

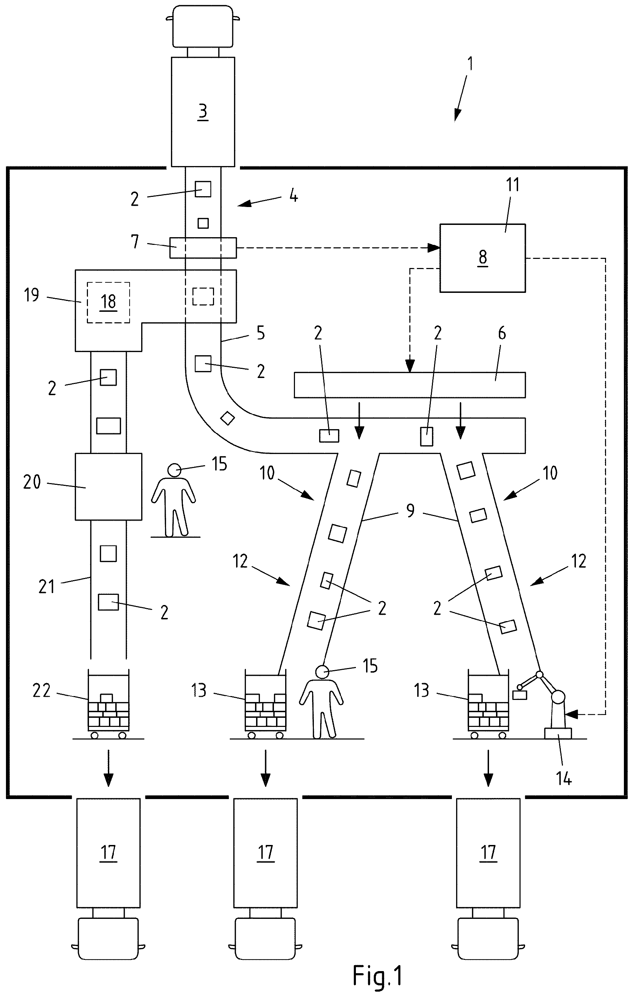

In der Fig. 1 ist eine Sortierstation 1 zum Umschlagen von Packstücken 2 dargestellt. Bei den Packstücken 2 kann es sich um Stückgüter aufweisende Pakete, Umschläge, Tüten und/oder Säcke handeln. Die Packstücke 2 werden mit Transporteinheiten 3 in Form von Nutzfahrzeugen, insbesondere Lastkraftwagen, Anhängern und/oder Sattelaufliegern an die Sortierstation 1 herangefahren, wobei sich die Packstücke 2 in den Aufbauten der Nutzfahrzeuge befinden. An der Sortierstation 1 angekommen werden die Packstücke 2 entladen und dabei vereinzelt. Beim dargestellten und insoweit bevorzugten Verfahren wird aus den entladenen Packstücken 2 eine einzige Transportreihenfolge 4 von Packstücken 2 erzeugt. Die Transportreihenfolge 4 wird, insbesondere wenigstens im Wesentlichen stetig, mit wenigstens einem Förderband 5 durch die Sortierstation 1 bis zu einer Sortiereinrichtung 6 transportiert. Bedarfsweise können auch mehrere Transportreihenfolgen 4 erzeugt werden, die dann parallel in der Sortierstation 1 gehandhabt werden können.

Die Transportreihenfolge 4 der Packstücke 2 wird einem optischen Scanner 7 zugeführt. Zudem kann das Gewicht der Packstücke 2 erfasst werden. Bei dem dargestellten und insoweit bevorzugten Verfahren werden die Packstücke 2 durch einen Sechsseiten-Scanner 7 transportiert, wobei die Packstücke 2 jeweils von allen sechs Seiten gescannt werden. Es wird dabei eine Zielinformation wie eine Postleitzahl ausgelesen, die für das anschließende Sortieren der Packstücke 2 als Sortierparameter relevant ist. Die Reihenfolge der Packstücke 2 und die den Packstücken 2 zugeordneten Sortierparameter werden an eine Steuereinrichtung 8 übermittelt. Die Packstücke 2 werden vom Scanner 7 zur Sortiereinrichtung 6 transportiert, wo die Packstücke 2 entsprechend des Sortierparameters sortiert werden. Die sortierten Packstücke 2 werden von Rutschen 9, Förderbändern oder anderen Aufnahmen von einer Person oder einem Roboter 14 in die dafür vorgesehenen Transporteinheiten 13 gestapelt.

Hinsichtlich der Packstücke 2 bietet sich das beschriebene Verfahren an, wenn die Packstücke 2 durch Packmittel umverpackte Stückgüter, insbesondere jeweils mit einem Karton umverpackte Stückgüter sind. Besonders zweckmäßig ist es dabei, wenn die Packmittel Pakete, Tüten, Umschläge, Beutel und/oder Taschen sind. Entsprechende Packstücke 2 sind in Sortierstationen in großer Zahl und bei kurzer Verweilzeit zu sortieren und zu verteilen.

Die vom Scanner 7 erzeugten Aufnahmen werden ferner einer Auswerteeinheit 11 zugeführt. Die Auswerteeinheit 11 ermittelt anhand der Aufnahmen des Scanners 7 für jedes Packstück 2 eine Mehrzahl von Parametern. Einer dieser Parameter kann ein Sortierparameter sein, nach dem die Packstücke anschließend in der Sortiereinrichtung sortiert werden.

Auf diese Weise werden Sortierreihenfolgen 12 aus Packstücken 2 erzeugt, die jeweils gleiche, ähnliche oder zugehörige Sortierparameter aufweisen. Dabei unterscheiden sich bei dem dargestellten und insoweit bevorzugten Ausführungsbeispiel die Sortierparameter unterschiedlicher Sortierreihenfolgen 12 voneinander. Zudem werden die Packstücke 2 bei dem dargestellten und insoweit bevorzugten Ausführungsbeispiel in der Reihenfolge entsprechend der jeweiligen Sortierreihenfolge 12 in zugehörige Transporteinheiten 13 eingelegt. Die Packstücke 2 aus einer Transporteinheit 3 können damit auf verschiedene andere Transporteinheiten 13 aufgeteilt werden.

Das Einlegen der Packstücke 2 in die Transporteinheiten 13 kann durch einen Roboter 14 und/oder durch einen Mitarbeiter 15 erfolgen, und zwar bedarfsweise in der Sortierreihenfolge 12. Bei der dargestellten und insoweit bevorzugten Sortierstation 1 werden die beladenen Transporteinheiten 13 in Nutzfahrzeugen 17, insbesondere Lastkraftwagen oder Anhänger verladen und abtransportiert. Erforderlich ist dies nicht. Die Transporteinheiten 13 könnten nach dem Beladen auch anderweitig gehandhabt werden.

Die Auswerteeinheit 11 kann anhand der Aufnahmen des Scanners 7 aber auch die Größe der Packstücke 2 etwa in Form einer Höhe, einer Breite und/oder einer Länge ermitteln. Diese Parameter können für ein platzsparendes Stapeln der Packstücke 2 in den Transporteinheiten 13 genutzt werden. Es kann anhand dieser Parameter aber auch bestimmt werden, welche Packstücke 2 in einer Prüfstation 18 auf Beschädigungen des Packguts geprüft werden sollten. Zusätzlich oder alternativ kann die Auswerteeinheit 11 anhand der Aufnahmen des Scanners 7 ein Parameter betreffend die Form der Packstücke 2, die Oberfläche der Packstücke 2, die Art des Packmittels, ein auf dem Packstück 2 vorgesehenes Logo, ein auf dem Packstück 2 aufgeklebter Aufkleber und/oder ein Retourenlabel erfassen. Wenigstens einer dieser Parameter kann ergänzend oder alternativ dazu genutzt werden, festzulegen welches Packstück 2 in der Prüfstation 18 auf Beschädigung des Packguts geprüft werden sollte. Gleiches gilt auch für Parameter betreffend die Beschaffenheit der Packstücke 2, wie eine Feuchtigkeit des Packmittels, ein Fleck des Packmittels, die Art und/oder Anordnung von Klebebändern auf dem Packstück 2, ein Öffnungsgrad eines Öffnungsbereichs des Packstücks 2, die Form wenigstens einzelner Kanten, Ecken und/oder Nähte des Packstücks 2, Oberflächendefekte des Packstücks 2 wie Abschabungen, Dellen, Knicke, Rissen und/oder Schnitte. All diese Parameter können darauf schließen lassen, dass das Packgut des entsprechenden Packstücks 2 mit einer höheren Wahrscheinlichkeit beschädigt ist als beispielsweise Standard-Packstücke 2, bei denen sich empirisch gezeigt hat, dass diese recht unempfindlich gegenüber Beschädigungen sind.

Je nach den Vorgaben der Auswerteeinheit 11 bzw. je nach den Schlussfolgerungen einer in die Auswerteeinheit 11 integriert künstliche Intelligenz (KI) kann anhand der entsprechenden Packstück-Parameter, welche mittels des Scanners 7 erfasst worden sind, entschieden werden, ob ein bestimmtes Packstück 2 über eine Übergabeeinheit 19 aus der Transportreihenfolge 4 ausgeschleust und an die Prüfstation 18 übergeben wird. In der Prüfstation 18 erfolgt eine Beschädigungsprüfung, bei der den Packstücken 2 eine Prüfbewegung aufgeprägt wird.

Je nachdem Ergebnis der Beschädigungsprüfung in der Prüfstation 18, können die Packstücke 2 über die Übergabestation 19 wieder zurück in die Transportreihenfolge 4 eingeschleust oder an eine Überprüfungsstation 20 abgegeben werden. In der Überprüfungsstation 20 wird händisch von einem Mitarbeiter 15 überprüft, ob die Packstücke 2 tatsächlich beschädigt sind oder nicht. Hierzu muss der Mitarbeiter 15 regelmäßig die Packmittel öffnen, um hinreichenden Zugang zu den Packgütern zu erhalten. Die dann vom Mitarbeiter 15 tatsächlich als beschädigt erkannten Packgüter werden dann zusammen mit den Packmitteln in Form von Packstücken 2 an eine Beladestation 21 abgegeben und dort separat von den Packstücken 2 der Transportreihenfolge 4 und der Sortierreihenfolgen 12 in separate Transporteinheiten 22 verladen. Die Packstücke 2 in diesen separaten Transporteinheiten 22 können dann zurück an den Adressaten der Packstücke 2 geschickt oder aber einer Entsorgung zugeführt werden. Das Verladen der entsprechenden Packstücke 2 in die Transporteinheiten 22 kann von einem Mitarbeiter oder einem Roboter übernommen werden.

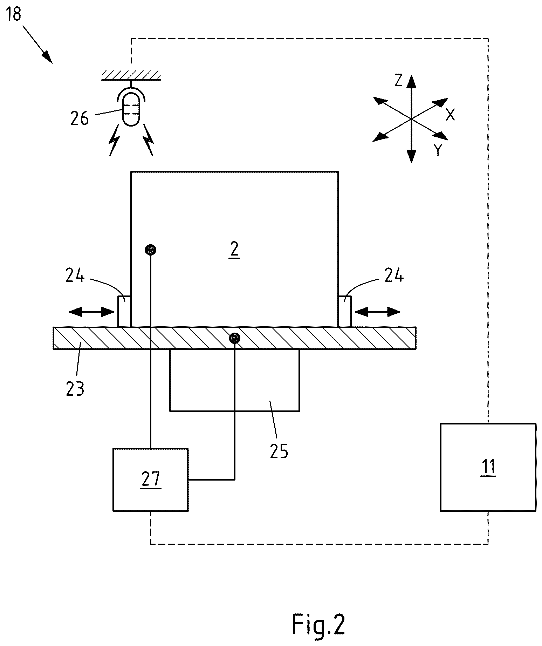

In der Fig. 2 ist schematisch die Prüfstation 18 der Fig. 1 im Detail dargestellt. Die Prüfstation 18 weist eine Grundplatte 23 auf, an der verstellbare Halter 24 angebracht sind, welche in Anlage an unterschiedlich große, auf der Grundplatte 23 befindliche Packstücke 2 gebracht werden können, um das entsprechende Packstück 2 auf der Grundplatte 23 zu halten. Die Grundplatte 23 kann mittels einer Antriebseinrichtung 25 in den drei Raumrichtungen (x-, y- und z-Richtung) translatorisch bewegt werden. Zudem kann die Grundplatte 23 mittels der Antriebseinrichtung 25 - bedarfsweise überlappend zu einer entsprechenden translatorischen Bewegung der Grundplatte - um die drei Raumrichtungen (x-, y- und z-Richtung) geschwenkt werden. Die Bewegung, welche auf diese Weise auf die Packstücke 2 übertragen wird, wird als die Prüfbewegung bezeichnet.

Die so auf die Packstücke 2 aufgeprägte Prüfbewegung induziert, zumindest potenziell, ein Antwortsignal, das akustischer und/oder mechanischer Natur sein kann. Das akustische Antwortsignal wird dabei vorzugsweise während der Übertragung der Prüfbewegung auf das Packstück 2 erzeugt, während ein mechanisches Antwortsignal bedarfsweise erst nach der Prüfbewegung erzeugt werden kann, wenn das Antwortsignal nicht durch weitere Bewegungen des Packstücks 2 beeinträchtigt werden kann. Das akustische Antwortsignal kann mit wenigstens einem Mikrofon oder einem vergleichbaren akustischen Sensor 26 erfasst werden. Bedarfsweise kann der Sensor 26 so eingestellt sein, dass er lediglich die Lautstärke des Antwortsignals bestimmter Schall-Frequenzen oder bestimmter Schall-Frequenzbänder erfasst. In vielen Fällen werden nämlich nur solche Informationen für eine Abschätzung signifikant sein, ob das jeweilige Packgut beschädigt ist oder nicht. Bedarfsweise kann diese Information auch für die Abschätzung genutzt werden, in welchem Maße das Packgut beschädigt ist. Dies lässt sich dann als Beschädigungsgrad angeben.

Das mechanische Antwortsignal kann durch wenigstens einen mechanischen Sensor 27 erfasst werden, der die Bewegung der beweglich gelagerten Grundplatte 23 und/oder die Bewegung des Packstücks 2 aufnimmt. Eine bewegliche Lagerung der Grundplatte 23 nach dem Aufprägen der Prüfbewegung erlaubt ein Nachschwingen oder dergleichen der Grundplatte 23 und damit des Packstücks 2. Es kann aber auch vorgesehen sein, dass die Grundplatte 23 nach dem Übertragen der Prüfbewegung auf das Packstück 2 festgelegt wird, um lediglich das Nachschwingen oder dergleichen des Packstücks 2 alleine mit dem wenigstens einen mechanischen Sensor 27 aufnehmen zu können. Auf diese Weise kann beispielsweise die Schwingung, die Trägheit, die Auslenkung und/oder die Kraft erfasst werden, welche von der Grundplatte 23 und/oder vom Packstück 2 auf den Sensor 27 übertragen wird. Dies erfolgt bedarfsweise richtungs- und/oder zeitabhängig, um ein Antwortsignal mit einer höheren Aussagekraft aufnehmen zu können.

Die auf ein bestimmtes Packstück 2 aufgeprägte Prüfbewegung kann anhand der Art, der Größe und/oder der Beschaffenheit des Packstücks 2 ausgewählt werden. Die Art, Größe und/oder Beschaffenheit kann dabei anhand der Aufnahme des optischen Scanners 7 ermittelt werden, wie dies zuvor bereits beschrieben worden ist.

Alternativ oder zusätzlich wird auf ein Packstück 2 eine erste Prüfbewegung aufgeprägt und das wenigstens eine Antwortsignal aufgenommen. Daraus können Informationen über das in dem Packstück verpackte Packgut oder die potenzielle Beschädigung gewonnen werden, um so gezielt eine zweite Prüfbewegung auszuwählen, die dem Packstück 2 anschließend aufgeprägt wird. Denkbar ist es sogar anhand dieses zweiten Antwortsignals noch eine weitere Prüfbewegung auszuwählen und diese ebenfalls auf das Packstück 2 zu übertragen, um noch ein weiteres Antwortsignal zu erhalten. Die entsprechende Auswahl einer Prüfbewegung erfolgt durch die Auswerteeinheit 11, an welche die Antwortsignale weitergeleitet werden.

Wenigstens ein an einem Packstück 2 aufgenommenes Antwortsignal wird in der Auswerteeinheit 11, an die das Antwortsignal von dem wenigstens einen akustischen und/oder mechanischen Sensor 26,27 weitergeleitet wird, einer Mustererkennung unterzogen. Dabei kann das Antwortsignal mit einer Vielzahl von zuvor empirisch ermittelten Antwortsignalen verglichen werden, für welche die Beschädigung oder der Grad der Beschädigung des Packguts dokumentiert ist. Aus ähnlichen Antwortsignalen kann dann auf ähnliche Beschädigungen oder Beschädigungsgrade geschlossen werden. Dabei ist jedoch kein vollständiger Vergleich der Antwortsignale erforderlich. Es reicht aus, wenn in dem neu aufgenommen Antwortsignal nach Mustern gesucht wird, welche charakteristisch für bestimmte Beschädigungen von Packgütern sind. Um diese Muster ausfindig zu machen, kann sich einer künstlichen Intelligenz bedient werden. Ebenso kann sich einer künstlichen Intelligenz bedient werden, um aus dem Vergleich eines neuen Antwortsignals mit den vorbekannten, auf bestimmte Beschädigungen hinweisenden Mustern ein Beschädigungsparameter zu ermitteln.

Denkbar ist, dass der Beschädigungsparameter lediglich zwei Werte annehmen kann. Bevorzugt wird es jedoch in vielen Fällen sein, wenn der Beschädigungsparameter mehr als zwei Werte, etwa drei, vier oder fünf unterschiedliche Werte annehmen kann. Denkbar ist auch, dass der Beschädigungsparameter einen beliebigen Wert aus einem Wertebereich rationalen Zahlen aufweisen kann.

### Bezugszeichenliste

- 1: Sortierstation
- 2: Packstück
- 3: Transporteinheit
- 4: Transportreihenfolge
- 5: Förderband
- 6: Sortiereinrichtung
- 7: Scanner
- 8: Steuereinrichtung
- 9: Förderband
- 11: Auswerteeinheit
- 12: Sortierreihenfolge
- 13: Transporteinheit
- 14: Roboter
- 15: Person
- 17: Nutzfahrzeug
- 18: Prüfstation
- 19: Übergabeeinheit
- 20: Überprüfungsstation
- 21: Beladestation
- 22: Transporteinheit
- 23: Grundplatte
- 24: Halter
- 25: Antriebseinrichtung
- 26: Sensor
- 27: Sensor

## Patentansprüche

1. Verfahren zum Umschlagen von Packstücken (2) jeweils umfassend ein Packmittel und ein in dem Packmittel verpacktes Packgut, insbesondere in einer Sortierstation (1),
- bei dem wenigstens einzelnen der umzuschlagenden Packstücke (2) in einer Prüfstation (18) wenigstens eine definierte Prüfbewegung zum Induzieren von akustischen und/oder mechanischen Antwortsignalen in Abhängigkeit von möglichen Beschädigungen des Packguts aufgeprägt wird,
- bei dem die Antwortsignale von wenigstens einem der Prüfstation (18) zugeordneten akustischen und/oder mechanischen Sensor (26,27) erfasst und an eine Auswerteeinheit weitergeleitet werden,
- bei dem die Auswerteeinheit (11) die Antwortsignale einer auf einer Vielzahl von zuvor empirisch ermittelten Zusammenhängen von Antwortsignalen und möglichen Beschädigungen zugehöriger Packgüter basierenden Mustererkennung unterzieht,
- bei dem die Auswerteeinheit (11) den Packstücken (2) anhand der Mustererkennung wenigstens einen eine mögliche Beschädigung charakterisierenden Beschädigungsparameter zuordnet und
- bei dem die Packstücke (2) in Abhängigkeit des jeweiligen Beschädigungsparameters auf unterschiedliche Weise weiter umgeschlagen werden.

2. Verfahren nach Anspruch 1,
- bei dem der, insbesondere als Mikrofon ausgebildete, akustische Sensor (26) akustische Antwortsignale in Form der Lautstärke über wenigstens bestimmten Frequenzen und/oder Frequenzbändern erfasst,
- bei dem, vorzugsweise, der akustische Sensor (26) die Antwortsignale zeitabhängig und/oder während des Aufprägens der Prüfbewegung auf die Packstücke (2) erfasst.

3. Verfahren nach Anspruch 1 oder 2,
- bei dem der mechanische Sensor (27) mechanische Antwortsignale betreffend die durch die Prüfbewegung induzierte Schwingung, Trägheit, Auslenkung und/oder Kraft erfasst wird und
- bei dem, vorzugsweise, die mechanischen Antwortsignale zeit- und/oder richtungsabhängig erfasst werden.

4. Verfahren nach Anspruch 3,
- bei dem die mechanischen Antwortsignale im, insbesondere unmittelbaren, Anschluss an die Prüfbewegung erfasst werden.

5. Verfahren nach einem der Ansprüche 1 bis 4,
- bei dem die Prüfbewegung über eine die Packstücke (2) tragende Grundplatte (23) auf die Packstücke (2) aufgeprägt wird und
- bei dem, vorzugsweise, die Grundplatte (23) in wenigstens einer Raumrichtung (x, y, z) bewegt und/oder um wenigstens eine Raumrichtung (x, y, z) geschwenkt wird.

6. Verfahren nach einem der Ansprüche 1 bis 5,
- bei dem Prüfbewegung, insbesondere die Frequenz und/oder die Amplitude der Prüfbewegung, in vorbestimmter Weise an das jeweilige Packstück (2), insbesondere in Anhängigkeit des für dasselbe Packstück (2) zuvor bereits ermittelten Antwortsignals, angepasst wird und/oder
- bei dem Prüfbewegung, insbesondere die Frequenz und/oder die Amplitude der Prüfbewegung, in vorbestimmter Weise in Anhängigkeit der Art, der Größe und/oder der Beschaffenheit des Packstücks (2) angepasst wird.

7. Verfahren nach einem der Ansprüche 1 bis 6,
- bei dem die umzuschlagenden Packstücke (2) mit einem optischen Scanner (7), insbesondere in Form eines Sechsseiten-Scanners (7) und/oder eines Linienscanners, insbesondere eines RGB-Linienscanners, und/oder eines Volumenscanners gescannt werden,
- bei dem die Auswerteeinheit (11) anhand der Aufnahmen des Scanners (7) die Art, Größe und/oder Beschaffenheit der umzuschlagenden Packstücks (2) ermittelt und
- bei dem, vorzugsweise, wenigstens im Wesentlichen nur umzuschlagende Packstücke (2) mit vorbestimmter Art, Größe und/oder Beschaffenheit der Prüfstation (18) zur Zuordnung eines Beschädigungsparameters zugeführt werden.

8. Verfahren nach Anspruch 7,
- bei dem die Auswerteeinheit (11) die Größe der Packstücke (2) in Form einer Höhe, einer Breite und/oder einer Länge ermittelt und/oder
- bei dem die Auswerteeinheit (11) die Art der Packstücke (2) anhand der Form, der Oberfläche, der Art des Packmittels, einem erfassten Logo, einem erfassten Aufkleber, einer erfassten Absender-Adresse und/oder einem erfassten Retourenlabel ermittelt und/oder
- bei dem die Auswerteeinheit (11) die Beschaffenheit der Packstücke (2) anhand der Feuchtigkeit des Packmittels, eines ermittelten Flecks des Packmittels, der Art und/oder Anordnung von auf dem Packstück (2) angebrachten Klebebändern, einem Öffnungsgrad eines Öffnungsbereichs des Packstücks (2), der Form der Kanten, Ecken, Nähte des Packstücks (2), von Oberflächendefekten wie Abschabungen, Dellen, Knicke, Rissen und/oder Schnitten ermittelt.

9. Verfahren nach einem der Ansprüche 1 bis 8,
- bei dem wenigstens im Wesentlichen nur die Packstücke (2) mit vorbestimmten Beschädigungsparametern einer Sortiereinrichtung (6) zum Sortieren der Packstücke (2) und/oder eine Verladestation zum Verladen der Packstücke (2) in Transporteinheiten (13,22) zugeführt werden.

10. Verfahren nach Anspruch 9,
- bei dem die Packstücke (2) wenigstens im Wesentlichen abhängig von den jeweiligen Beschädigungsparametern unterschiedlichen Verladestation zum Verladen der Packstücke (2) in unterschiedliche Transporteinheiten (13,22) zugeführt werden.

11. Verfahren nach einem der Ansprüche 1 bis 10,
- bei dem die Packstücke (2) aus Transporteinheiten (3) entnommen und, insbesondere nach einem Sortieren der Packstücke (2) in einer Sortiereinrichtung, in anderer Zusammensetzung wieder in Transporteinheiten (13,22) verladen werden und
- bei dem als Transporteinheiten (3,13,22) Rollbehälter, Gitterboxen, Paletten, mit oder ohne Wände, Wechselbrücken, LKW und/oder Unit Load Devices (ULD) verwendet werden.

12. Verfahren nach Anspruch 11,
- bei dem die Packstücke (2) nach dem Entnehmen aus den Transporteinheiten (3) nacheinander in einer Transportreihenfolge (4) dem optischen Scanner (7) und anschließend einer Übergabeeinheit (19) zum Übergeben von einzelnen Packstücken (2), insbesondere in Abhängigkeit von den Aufnahmen des Scanners (7), aus der Transportreihenfolge (4) und in die Prüfstation (18) zugeführt werden.

13. Verfahren nach Anspruch 12,
- bei dem die Packstücke (2) in Abhängigkeit ihrer Beschädigungsparameters von der Übergabeeinheit (19) zurück in die Transportreihenfolge (4) überführt oder an eine von der Transportreihenfolge (4) separate Behandlungseinrichtung abgegeben werden.

14. Verfahren nach Anspruch 12 oder 13,
- bei dem die Packstücke (2) in der sich nach der Übergabeeinheit (19) ergebenden Transportreihenfolge (4) der Sortiereinrichtung (6) zugeführt und in der Sortiereinrichtung (6) in Sortierreihenfolgen (12) aufgeteilt werden.

15. Verfahren nach einem der Ansprüche 9 bis 14,
- bei dem die Auswerteeirichtung (11) anhand der Aufnahmen des optischen Scanners (7) einen Sortierparameter der Packstücke (2) erfasst und den Packstücken (2) entsprechend zuordnet und
- bei dem die Packstücke (2) entsprechend in der Sortiereinrichtung (6) entsprechend ihrer Sortierparameter sortiert werden.
